# EUROPEAN PATENT SPECIFICATION

(11) **EP 3 210 181 B1**
(45) Date of publication and mention of the grant of the patent: **04.05.2022**
(21) Application number: 15852123.7
(22) Date of filing: 19.10.2015
(51) Int. Cl.: G06Q 50/06, G05B 15/02, H02J 13/00

(54) **SYSTEMS AND METHODS FOR IDENTIFYING AND ADHERING TO NORMATIVE OPERATIONAL CONSTRAINTS IN UTILITY GRIDS**
SYSTEME UND VERFAHREN ZUR IDENTIFIZIERUNG UND EINHALTUNG NORMATIVER BETRIEBLICHER EINSCHRÄNKUNGEN IN VERSORGUNGSNETZEN
SYSTÈMES ET PROCÉDÉS POUR IDENTIFIER ET ADHÉRER À DES CONTRAINTES FONCTIONNELLES NORMATIVES DANS DES RÉSEAUX ÉLECTRIQUES

(30) Priority: 23.10.2014 US 201462067493 P
(43) Date of publication of application: 30.08.2017
(73) Proprietor: 3M Innovative Properties Company, St. Paul, MN 55133-3427 (US)
(72) Inventor: BROOKS, Brian E., Saint Paul, Minnesota 55133-3427 (US); LU, Yang, Singapore 680656 (SG); BENOIT, Gilles J., Saint Paul, Minnesota 55133-3427 (US)
(74) Representative: Vossius & Partner Patentanwälte Rechtsanwälte mbB
(86) International application number: PCT/US2015/056191
(87) International publication number: WO 2016/064721

(56) References cited:
- KR-A- 20090 029 055
- KR-A- 20110 081 445
- KR-A- 20110 081 445
- US-A- 5 404 127
- US-A1- 2003 109 951
- US-A1- 2011 047 418
- US-A1- 2012 173 456
- US-A1- 2012 173 456
- US-A1- 2013 289 790
- US-A1- 2013 289 790
- US-A1- 2014 129 491

## Description

### BACKGROUND

Current approaches to "smart grids" and applying detailed sensor measurement and machine learning to utility grid management uses only retrospective data-mining "big data" approaches to learning, and does not use active control and variation to explore grid responses to various conditions. Active control could provide quicker, more powerful cause-and-effect understanding of the state of the grid indicated by particular sensor responses and the effects of actions on overall grid conditions and better enable the management of utilities grids and responses to potential faults on those grids.

Utility grid operations include inherent risk, due to the physical characteristics of the utilities and their methods of transport and distribution, be it explosive natural gas, high-pressure water, or electricity. In addition to that catastrophic risk, grid operations can be highly complex, and the quality of the delivery to the utility user is highly important. For example, power quality issues cost over $100 million per year, through impacts such as reducing device lifetime. Grid design and utility transmission may be very complex, and combinations of conditions each within the operating conditions for that parameter may induce grid faults or cause problems with delivered utility quality. Detailed constraints are needed to entrust grid operations to automated control schemes.

This risk introduces the potential of opportunity costs into controlling operational decisions on the grid and actively experimenting to build grid knowledge. However, due to the complexity and lack of coordination among grid elements, and uncertainty in selecting and implementing actions, there is typically a window within which opportunity costs for active control of the grid are equal to or less than those of ordinary grid opportunites, essentially making that envelope opportunity-cost-free compared to current grid management while allowing for meaningful experimentation and discovery of grid characteristics and response behaviors.

As a result of the risks involved in their operations, utilities grids are both very conservative as businesses and highly regulated. Due to those two factors, many selections of actions to adjust grid parameters require approval by a human in the loop, limiting the potential for automatic control of utilities grids without means to approve and manage the levels of risk and the operating ranges through which automated systems may drive the grid.

There is a need for methods to enable automated variation in grid conditions and treatments while keeping the system within permissible operating ranges. One way to do this is discovery of the normative operating conditions through machine learning and/or expert systems, and then to apply those permissible operational states as constraints, only allowing grid state changes, actions, and treatments that are predicted to uphold the normal operational constraints at the times and locations at which they are implemented.

US 2003/0109951 A1 discloses a system for monitoring an industrial process and taking action based on the results of process monitoring.

US 2014/0129491 A1 discloses a method that includes formulating an optimization problem to determine a plurality of model parameters of a system to be modeled. The method also includes solving the optimization problem to define an empirical model of the system. The method further includes training the empirical model using training data. The empirical model is constrained via general constraints relating to first-principles information and process knowledge of the system.

US 5 404 127 A discloses a power line communication, PLC, apparatus. US2012173456 A1 discloses a decision support system for the management of energy use, contracting and capital investments for facilities.

### SUMMARY OF THE INVENTION

The invention is defined by the claims.

The invention is directed towards systems and methods for establishing a range of grid conditions matching the envelope of permissible operation variations on the grid, within which experimentation on and optimized selection of grid actions can be performed without increasing risks or opportunity costs beyond those of normal grid operations, with embodiments doing so by receiving information regarding the active controls, creating a multidimensional space where each dimension is a control and each of those dimensions includes the states of that control, constraining the space to eliminate portions that include impermissible control states or combinations, and actively controlling the grid only within the range defined by the constrained multidimensional space.

### BRIEF DESCRIPTION OF THE DRAWINGS

Fig. 1 is a flow chart of a method of the invention
Fig. 2 is a diagram of a grid and its available controls in an example embodiment of the invention.
Fig. 3 is a system diagram illustrating a system of the invention
Fig. 4 is a data flow diagram illustrating the flow of information within a system of the invention.

### DETAILED DESCRIPTION OF VARIOUS EMBODIMENTS

Automated control to explore grid conditions and responses is optimally pursued without disrupting utility service to customers and when it can be seamlessly integrated with normal operations. Exploration can be centered on actionable discoveries, and the exploration integrated with normal operations, by discovering available controls, defining a space based on the possible control states, and constraining that space based on permissible operational conditions, creating a space that may be searched through ordinary grid operations without increasing risk or opportunity costs beyond those inherent in ordinary grid operations.

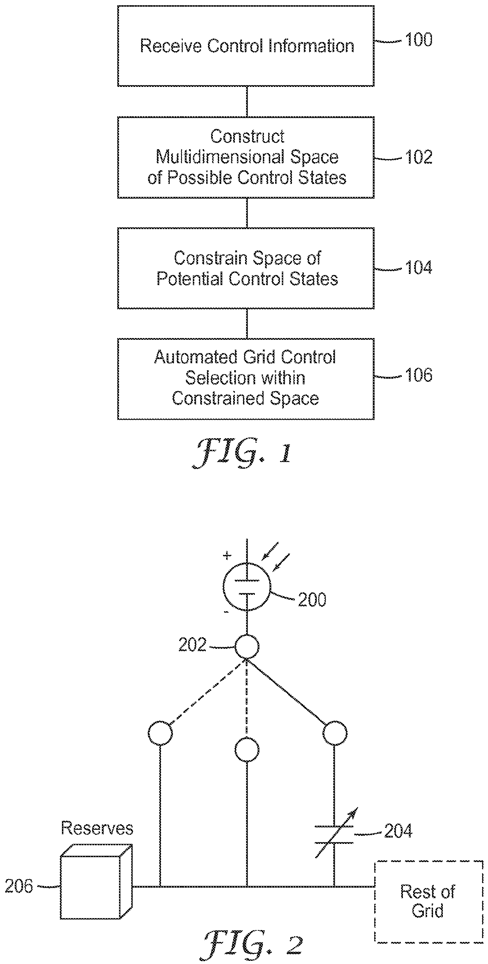

Fig. 1 is a flowchart of an example method embodiment of the invention. Control information is received in step **100,** and the control information is used as the basis for constructing a multidimensional space of possible control states in **102.** The space of potential control states is constrained based on normative operational conditions of the grid in **104,** and automated experimentation and/or operational controls are applied within that constrained multidimensional space in step **106.**

Control information is received in step **100.** The control information includes the possible states of each control that is included in an automated experimentation and/or optimization system. Controls include any particular element of the grid that has multiple potential states, which may be actively controlled. Examples of controls on electrical grids include switches directing the routing of power, photovoltaic inverters that can supply variable levels of power to the grid, and/or controllable power storage devices. Examples on water grids include treatment facilities with variable throughput rates, valves along distribution lines and/or switches controlling flow at pipe junctions and divisions. Examples on gas distribution networks include switches and valves along the distribution lines and/or pressure or flow providing sources. For an individual control, the possible control states may be, for example, the switch positions at a switch on an electrical grid, or the size of valve apertures on water or gas grids. This information may be collected from preexisting databases of grid components kept by grid operators, or component models of grids, where those are available, modified by the controls actually being given over to automatic control. Optionally, the grid controls may be indexed to provide the control information, by, for example, by using the connection between the controls and an automated experimentation and/or optimization system to identify all available grid controls.

The control information is used to construct a multidimensional space in step **102.** For this multidimensional space, each control is treated as a dimension, with points along that dimension for each of the possible particular states of the control. The multidimensional space then, represents each possible combination of control states possible given the controls that are available for automatic control as a point within that space. The multidimensional space is stored in memory, for example as a matrix containing the points of the multidimensional space, and optionally metadata associating each dimension with the particular control it represents.

For dimensions where there are discrete control states, such as switches that only have "on" and "off states, the dimension can simply include all control as individual points in that dimension, since these control states are finite, even in cases where they are numerous. For continuous control states, such as aperture widths in valves, which are theoretically infinite, these controls are made finite, for example, by assigning ranges of the continuous control to a specific point in the multidimensional space. This assignment may be done through selecting points and binning data based on proximity to the selected points in Euclidian space, with each selected point being the control states captured in points along that control's dimension. For experimental systems, the number of such points may be computed based on the granularity possible given the predicted signal-to-noise ratio (SNR) of testing along that dimension, based on a power analysis of the experiments, using a prediction of the number of test opportunities and the magnitude of differences expected between particular discrete points along the continuous control of the dimension.

The multidimensional space of control states is constrained to reflect normal operational conditions in step **104.** The constraints prevent automated controls from pushing the controlled grid elements to states that are unacceptable during ordinary grid operations (such as emergency or shutdown states), or combinations of grid control states among multiple elements that are unacceptable during ordinary grid operations (e.g. combinations of controls leading to severe undervoltage conditions in portions of an electrical grid, or that would produce dangerous overpressure in sections of a gas grid). The single-control constraints act on the dimensions associated with that control to prohibit the unacceptable control states. Combinatoric constraints may be discovered through machine learning methods such as neural networks, or Partially Observable Markov Decision Processes, where the belief states concern the existence of combinatoric constraints in the data sources used for determining the constraints, by applying these methods to the data from which constraints are determined.

These constraints may be derived through one or more techniques, and then applied to the multidimensional space. The constraints may be pre-existing, stored in databases by the grid, or input from human grid operators. The constraints restrict the multidimensional space to ensure that only points representing combinations of control states that are consistent with the ordinary operational envelope of the utility grid are included in the search space for an automated active control system, to ensure that experimentation and exploitation of knowledge by the system do not cause the grid to depart from ordinary conditions.

Constraints may be derived from historical data by applying machine learning techniques such as statistical classification, reinforcement learning, cluster analysis, or artificial neural networks to the historical data to create a model of past operations. This may also include tagging of certain periods, either automatically or through human input, for exclusion from consideration as "normal" operational conditions, to ensure that the constraints reflect the ordinary operational envelope of the grid as opposed to outlier conditions during periods of faults, leaks, shutdowns or other periods of departure from the ordinary operational envelope. Alternatively, outlier detection aspects of the machine learning techniques applied to analyze the historical data may automatically identify these periods and remove them from consideration in extracting the constraints from these datasets.

Constraints may be derived from component models, for example by using simulations of grid component behavior and interactions to establish the ordinary operational envelope of the grid controls, using simulations such as Monte Carlo simulations of grid behavior using the component model to identify the ordinary operational envelope of the grid.

Constraints may be elicited from human grid operators by various input systems such as expert systems that are configured to dynamically ask questions to reduce a search space of belief states relating to the parameters of the ordinary operational envelope, or to present situations for the human to either accept or reject as grid conditions consistent with the ordinary operational envelope of the grid.

These methods may be used alone or in conjunction with one another, using the different methods to build on one another, for example using historical data-based machine learning and/or model-based simulations to build the initial belief states used by an expert system to collect human input on the ordinary operational envelope, and may be used to test and verify the conclusions of one another, for example by flagging discrepancies between historical data-based machine learning and model-based simulations for human review.

The constrained multidimensional space is used to define the exploration and exploitation of grid control states and their effects on grid goals for an automated active grid control system in step **106.** Automated experimentation systems use the constrained multidimensional space as the possibility space within which controls may be manipulated to either test the impact of controls through experimental trials, or to select the combinations of grid control states to implement to maximize a grid objective, which may be one or more measures of grid performance, such as minimizing losses in water grids, maintaining pressures within proper ranges for delivery, safety and efficiency on gas grids, or maximizing power quality, closely matching demand while fulfilling customer requirements, and/or renewable source utilization on electrical grids.

Optionally, the multidimensional space may be updated dynamically, when the conditions giving rise to the multidimensional space change, such as the addition of new components to the grid, expanding the scope of automated control, or changes to the constraints either through input or discovery, including input of regulatory or other human-mediated constraints in addition to those derived from observations of grid operations and the definition of ordinary grid conditions. For newly added controls, new dimensions are created and constraints collected. For parts that have been replaced, the old dimension is discarded and a new dimension is created and constraints collected, reflecting the new control options and constraints presented by the new component over the old one. When new constraint information is added, the constraints are recalculated to apply to all of the current dimensions in the multidimensional space.

The multidimensional space may also be updated periodically to alter the spatial and temporal granularity of automated experimentation and optimization. To increase the granularity, the dimensions originally associated with a particular control will be divided into separate dimensions representing the control during certain external conditions such as time periods, loads on the grid from non-controlled grid assets, or defined external conditions such as storms. In these situations, a new dimension is created for the particular set of conditions, and there is a conditional dependence among the dimensions in the space, where the external conditions will determine which of the dimensions is included in the space to be explored and exploited. Data is preferably kept separately for each dimension even if they are related to the same control, under differing conditions. The dimension is added and may be subject to the addition of constraints, just as ordinary grid control dimensions; users may be prompted to approve the creation of new dimensions, or alerted when new dimensions are needed and asked to apply constraints. Additional dimensions may also be constrained based on grid operational data or models of grid component behavior, including data generated during the operation of an automated active control system which may provide causal knowledge of component behavior. Dimensions may be combined or collapsed to reduce dimensionality that an automated active control system manages, for example in response to discovering that a control has a state that is strictly superior to its other possible states regardless of other grid control states, or that multiple controls track together and can be treated as the same. Data generated by the automated active grid control system may be used to make the determination of whether to combine or collapse dimensions. Combining dimensions assigns both controls to one dimension, eliminating the other dimension. Collapsing dimensions removes the dimension while assigning the control to a particular state, or removing it from the control of the automated active grid control system.

The constrained multidimensional space can be used as the search and optimization space for active control of the utilities grid, ensuring that manipulations of the grid remain within the normal operational conditions of the grid, controlling the opportunity costs and risks involved in automated, algorithmic control of power grid elements and the potential to use that control for experimentation and optimization of grid conditions.

Fig. 2 is an illustrative example of a number of grid controls that may be controlled through embodiments of the invention, and the locations of those controls and the grid and their potential ability to impact the grid. In this example the grid is an electrical grid, with 4 controls made available for automated experimentation and optimization, whose possible and ordinary operational states define the search and optimization space for that automated system.

Control **200** is, in this example, a switch connecting the inverter for a set of photovoltaic cells to the grid as a whole. This control has two discrete states, an "on" position where it is connecting the inverter to the grid, and an "off position where the inverter is isolated from the grid. Therefore, the dimension based on this control has two states, one representing "on" and the other representing "off'. An automated active control system may use this control to choose when to integrate power from the inverter into the grid, which has effects on available power and power quality, and may matter to metrics such as utilization of renewable sources.

Control **202** is a three-way switch routing power among three different nodes along the grid, from which the power propagates through the rest of the grid. This control has three discrete states, representing each of the nodes it may be supplying power to. An automated active grid control system may use this control to match power demand, to manage power quality issues, and to minimize power being sent to areas with detected faults.

Control **204** is a variable-load power storage device, which is continuously variable from zero to 100% power draw, and with one output level when it supplies power to the grid. The continuously variable power draw may be made discrete by selecting points, to which data is binned based on distance in Euclidian space. For this example, the continuous power draw is treated as having 4 discrete points: 0%, 33%, 67% and 100% of its possible power draw; for those points, the binning may be: 0-16% assigned to the 0% point, 17-50% assigned to the 33% point, 51-83% assigned to the 66% point, and 84-100% assigned to the 100% point, with the active control system maintaining those ranges for when those points are assigned; the ranges and number of points may be adjusted as time goes on. This control ends up having 5 points along its dimension, representing the 4 ranges and the "supplying power" state. This control may be used by an automated active grid control system to maximize renewable usage, match power demand, and there may be power quality issues involved with either the load or the provided power from the storage device.

Control **206** is a turbine connected to a section of the grid to provide spinning reserves for meeting sudden spikes in demand; this turbine's power output is controllable, with that control being continuous across a range. Because the control is continuous, it must be divided into discrete points to serve as the points along its corresponding dimension in the multidimensional space. A power analysis for an experimental trial is performed based on predictions of the sample size possible for varying control **206,** determining the size of effect that can be detected in a given amount of time based on the number of trials possible over that period of time. For this example, the number of opportunities to vary control **206** is very low, due to the possibility of lagging effects and the spin-up/spin-down time of the turbine causing the computed experimental units to be very long. A small potential sample size means that effects must be very large to be detectable above the noise involved in these measurements. Using the signal-to-noise ratio from the power analysis, the number of points along the range to bin the nearby data to is determined; in this example, where only large effects can be detected, the number of points is correspondingly small. In other cases where the signal-to-noise ratio is very high and small effects can be detected due to large predicted sample sizes, higher numbers of points can be selected to provide automated active control systems using the multidimensional space with better granularity and more detailed control over controls whose effects can be detected as a better SNR. Due to the poor SNR for this control, Control **206** has three points along its range, 0, 50% and 100% of capacity, to which data will be binned; this means that 0-25% of capacity will be binned to the point in the dimension for 0%, 26-74% of capacity will be binned to the point in the dimension for 50%, and 75-100% will be binned to point in the dimension for 100% in this example. Control **206** may influence power quality, demand satisfaction, and affects the level of renewable utilization and fuel costs of the grid, and may be used to explore and exploit the effects of the control on those parameters.

In this example, the multidimensional space is 4-dimensional, with dimensions for each control, controls **200, 202, 204,** and **206.** For control **200**, the dimension includes two points, for the "on" and "off states. For control **202,** the dimension includes three points, for each of the switch positions. For control **204,** the dimension includes five points, for the four points to which the continuous range are binned to, and the state where the storage device is providing power to the grid instead of drawing it. For control **206,** the dimension includes three points, for the 0%, 50% and 100% of capacity states. This means that the example multidimensional space of Fig. 2, before the application of constraints, includes 180 points, defined by the points along the four dimensions, such as [off, position 1, 66%, 100%], or [on, position 3, 33%, 50%].

This example space may be then constrained based on the normative operational conditions of the controls both individually and in combination with one another. An example of an individual constraint is that control **204** is discovered, through machine learning applied to historical operational data, to always be either in a power-drawing or power-supplying state, never being in its neutral, 0% draw state during ordinary grid operations; the constraint reflecting that condition may be implemented by removing the 0% point from the entire dimension representing the possible state of control **204.** For example of a combinatoric constraint, the switch of control **202** and the storage device of control **204** may have interactions such that in normal operational conditions, when the power source is at 33%, 67%, or 100% of its power draw, the switch may only be in position one. This conditional constraint is reflected in the multidimensional space by removing individual points in the multidimensional space that include combinations of points representing position 2 and position 3 on the dimension corresponding to control **202** with the points representing the 33%, 67% and 100% power-drawing states on the dimension corresponding to control **204.** The constrained multidimensional space may then be used to define the space within which an automated active grid control system that influences controls **200, 202, 204,** and **206** on the example electrical grid.

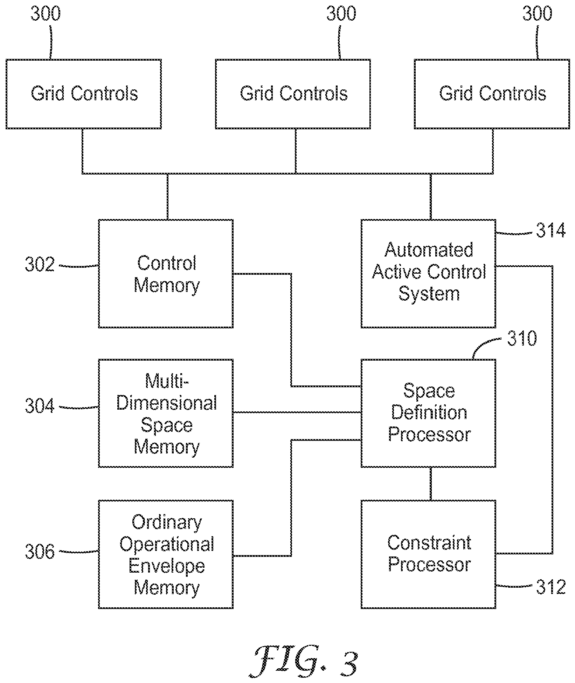

Fig. 3 is a diagram of an embodiment of the invention as a stystem. Memories may be known computer storage means such as flash memory, hard disk drives using magnetic media, or other methods for data storage that can store the data and be accessed frequently and regularly. Processors may be configured to make the calculations through software instructions. Connections among the components may be hard-wired, use of common processors for multiple steps, or networked through wired or wireless means such as the various 802.11 protocols, ZigBee or Bluetooth standards, Ethernet, or other known means for transmitting data among the separate sensors, processors, memories and modules. The sensors, memories, processors, and modules may be distributed across locations, including at the sensors themselves, or co-located in intermediate or central locations.

Grid Controls **300** are specific points where the utility grid may be controlled. Examples of controls on electrical grids include switches directing the routing of power, photovoltaic inverters that can supply variable levels of power to the grid, and/or controllable power storage devices. Examples on water grids include treatment facilities with variable throughput rates, valves along distribution lines and/or switches controlling flow at pipe junctions and divisions. Examples on gas distribution networks include switches and valves along the distribution lines and/or pressure or flow providing sources. The grid controls have states, which may be discrete (such as the positions of a switch or valves which only can be set to "open" or "closed") or continuous (such as variable aperture size valves). These grid controls are networked with an automated active control system that can alter the control states.

A control memory **302** is a memory configured to receive and store an index of the grid controls **300** and their potential states. The index contains a list of the controls and points associated with their possible states, either individual points for discrete controls, or points associated with ranges of continuous controls.

Multidimensional space memory **304** is a memory configured to receive and store the raw multidimensional space computed from the possible states of the available grid controls **300.** This is computed by the space definition processor **310,** which assigns each control indexed in the control memory **302** to a dimension having points associated with the possible states of that control.

Ordinary Operational Envelope memory **306** is a memory configured to receive and store the ordinary operational constraint data. The ordinary operational constraint data may include user input, databases of components, historical operational data, and/or models of component behavior.

Constrained Multidimensional Space memory **308** is a memory configured to receive and store the constrained multidimensional space computed from the raw multidimensional space stored in memory **304** as modified by the constraint processor **312.**

Space definition processor **310** is a processor configured to receive control index information from the control memory **302** and assemble the control index information into a multidimensional space where the controls are dimensions, with points in a dimension corresponding to possible states of the control.

Constraint processor **312** is a processor configured to receive ordinary operational envelope data from memory **306** and determine the control states and combinations that are consistent with the ordinary operational envelope, then apply the control information to constrain a raw multidimensional space so that points within the multidimensional space correspond only to combinations of states of available grid controls that are consistent with the ordinary operational envelope of the grid; this constrained multidimensional space is transferred to and stored in the constrained multidimensional space memory **308.**

Automated active control system **314** is a system that receives the constrained multidimensional space from the constrained multidimensional space memory **308,** and uses that constrained multidimensional space to define the space within which it can vary the controls while remaining within the grid's ordinary operational envelope. The automated active control system determines what states to put the grid controls **300** into and implements those control states automatically, using those selected and implemented control states to adjust grid parameters. The automated active control system may use the selected and implemented control states to drive particular grid parameters to more desirable states, or may use its ability to vary the grid controls **300** to conduct experimental trials or create conditions where the grid's response to the selected and implemented control states can be measured to refine understandings of the link between grid controls **300** and the response of the grid as a whole.

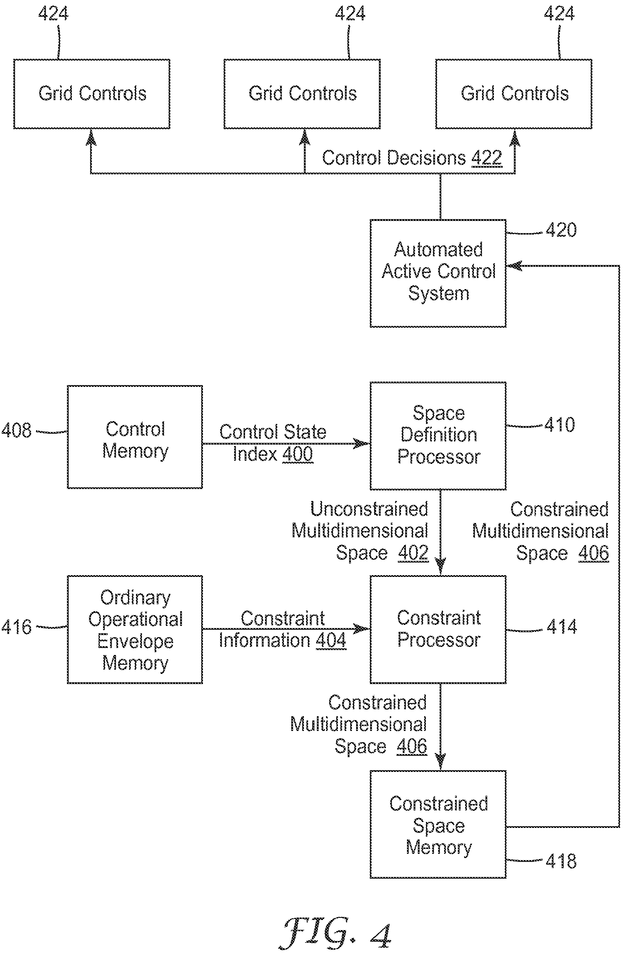

Fig. 4 is a data flow diagram showing the exchange of information among the components of an embodiment of the invention. Data created, used, and/or transferred by embodiments of this invention include: control states **400,** unconstrained multidimensional space **402,** constraint information **404,** and constrained multidimensional space **406.**

Control state index **400** is received by the space definition processor **410** from the control memory **408.** The control state index information **400** is used by the space definition processor **410** to compute the unconstrained multidimensional space **402.** The index may be generated for example, by using the connection between the controls and an automated experimentation and/or optimization system to identify all available grid controls.

Unconstrained multidimensional space **402** is computed by the space definition processor **410,** by creating a dimension for each control, along which there are a finite number of points representing possible states for discrete controls or points representing ranges of the control for continuous controls. The space is based on the control state index **400.** The unconstrained multidimensional space information is transferred to and stored in multidimensional space memory **412,** which may then transfer it to the constraint processor **414** to be converted to the constrained multidimensional space **406.**

Constraint information **404** is data indicative of the ordinary operational envelope of the grid and the control states within that envelope. The constraint information may be pre-existing and received from grid databases, component models, or historical grid operational data, or input from human grid operators. The constraint information **404** is received by and stored in ordinary operational envelope memory **416** and supplied to the constraint processor **414,** which uses the constraint information to transform the unconstrained multidimensional space **402** into the constrained multidimensional space **406,** to ensure that the constrained multidimensional space **406** is consistent with the ordinary operational envelope of the grid.

Constrained multidimensional space **406** is output by the constraint processor which derives and applies constraints to restrict the multidimensional space to the ordinary operational envelope of the grid. The constrained multidimensional space **406** is generated by the constraint processor **416** based on the unconstrained multidimensional space **402** and the constraint information **404,** and is stored in constrained multidimensional space memory **418** and output to an automated active control system **420.** The automated active control system **420** uses the constrained multidimensional space **406** to define its available space for within which it can alter grid parameters to explore grid responses to controls or exploit knowledge of grid responses to controls to improve grid performance on one or more metrics. Active control system **420** selects control decisions **422** from among members of the constrained multidimensional space **406,** which are distributed to the grid controls **424** so that the grid controls can implement selected control states from within the multidimensional space **406** on the utility grid.

## Claims

1. A computer-implemented method, comprising:
receiving control information;
generating, using a processor, a multidimensional space of possible grid control states based on the control information;
constraining the multidimensional space by removing grid control states that are outside of normal operational conditions;
selecting, using a processor, a grid control state from the constrained multidimensional space; and
automatically adjusting one or more controls of the utility grid to implement the selected grid control state.

2. The computer-implemented method of claim 1, wherein the one or more controls comprise a load tap changer.

3. The computer-implemented method of claim 1, wherein the one or more controls comprise a capacitor bank.

4. The computer-implemented method of claim 1, wherein the one or more controls comprise responses to excavation near gas pipelines.

5. The computer-implemented method of claim 1, further comprising:
presenting a grid control state to a user through a user interface;
receiving a user input regarding the presented grid control state; and
including or excluding the presented grid control state from the constrained multidimensional space based on the user input.

6. The computer-implemented method of claim 1, wherein control data comprises an identifier for each control and possible states of that control.

7. The computer-implemented method of claim 1, wherein generating the multidimensional space comprises assigning ranges of values for continuous controls to discrete points in dimensions corresponding to the continuous controls.

8. The computer-implemented method of claim 1, wherein the multidimensional space comprises a dimension for each control, with a point in that dimension for every possible state of that control.

9. The computer-implemented method of claim 1, wherein constraining the multidimensional space comprises:
receiving grid operational data;
determining the control states represented in the grid operational data; and
constraining the multidimensional space by excluding the control states not represented in the operational data.

10. The computer-implemented method of claim 1, wherein constraining the multidimensional space comprises:
simulating grid control behavior in a component model;
determining the control states consistent with ordinary grid operations based on the simulation; and
constraining the multidimensional space by excluding the control states determined to be inconsistent with ordinary grid operations.

11. The computer-implemented method of claim 1, wherein constraining the multidimensional space comprises excluding combinations of grid control states that are unacceptable during ordinary grid operation.

12. A system for managing a utility grid, comprising:
a control memory storing control information;
a space definition processor configured to receive the control information and generate a multidimensional space based on the control information;
a multi-dimensional space memory configured to receive and store the multidimensional space generated by the space definition processor;
a constraint processor configured to receive the multi-dimensional space from the multidimensional space memory and constrain that multidimensional space; and
an automated active control system configured to select grid control states from a constrained multidimensional space,
wherein the system is configured to carry out the method according to any one of the claims 1 to 11.

## Patentansprüche

1. Ein computerimplementiertes Verfahren, das umfasst:
Empfangen von Steuerungsinformationen;
Erzeugen, unter Verwendung eines Prozessors, eines mehrdimensionalen Raums möglicher Netzsteuerungszustände auf der Grundlage der Steuerungsinformationen;
Beschränken des mehrdimensionalen Raums durch Entfernen von Netzsteuerungszuständen, die außerhalb von normalen Betriebsbedingungen liegen;
Auswählen, unter Verwendung eines Prozessors, eines Netzsteuerungszustands aus dem eingeschränkten mehrdimensionalen Raum;
und
automatisches Einstellen einer oder mehrerer Steuerungselemente des Versorgungsnetzes, um den ausgewählten Netzsteuerungszustand zu realisieren.

2. Das computerimplementierte Verfahren nach Anspruch 1, wobei das eine oder die mehreren Steuerungselemente einen Laststufenschalter umfassen.

3. Das computerimplementierte Verfahren nach Anspruch 1, wobei das eine oder die mehreren Steuerungselemente eine Kondensatorbank umfassen.

4. Das computerimplementierte Verfahren nach Anspruch 1, wobei das eine oder die mehreren Steuerungselemente Reaktionen auf Erdarbeiten in der Nähe von Gasrohrleitungen umfassen.

5. Das computerimplementierte Verfahren nach Anspruch 1, das ferner umfasst:
Darstellen eines Netzsteuerungszustands für einen Benutzer über eine Benutzeroberfläche;
Empfangen einer Benutzereingabe betreffend den dargestellten Netzsteuerungszustand; und
Einschließen oder Ausschließen des dargestellten Netzsteuerungszustands in den bzw. aus dem eingeschränkten mehrdimensionalen Raum auf der Grundlage der Benutzereingabe.

6. Das computerimplementierte Verfahren nach Anspruch 1, wobei Steuerungsdaten eine Kennung für jedes Steuerungselement und mögliche Zustände dieses Steuerungselements umfassen.

7. Das computerimplementierte Verfahren nach Anspruch 1, wobei das Erzeugen des mehrdimensionalen Raums aufweist: Zuweisen von Wertebereichen für kontinuierliche Steuerungselemente zu diskreten Punkten in Dimensionen, die den kontinuierlichen Steuerungselementen entsprechen.

8. Das computerimplementierte Verfahren nach Anspruch 1, wobei der mehrdimensionale Raum eine Dimension für jedes Steuerungselement mit einem Punkt in dieser Dimension für jeden möglichen Zustand dieses Steuerungselements umfasst.

9. Das computerimplementierte Verfahren nach Anspruch 1, wobei das Einschränken des mehrdimensionalen Raums umfasst:
Empfangen von Netzbetriebsdaten;
Bestimmen der in den Netzbetriebsdaten dargestellten Steuerungszustände; und
Einschränken des mehrdimensionalen Raums durch Ausschließen der in den Betriebsdaten nicht dargestellten Steuerungszustände.

10. Das computerimplementierte Verfahren nach Anspruch 1, wobei das Einschränken des mehrdimensionalen Raums umfasst:
Simulieren des Netzsteuerungsverhaltens in einem Komponentenmodell;
Bestimmen der Steuerungszustände in Übereinstimmung mit normalem Netzbetrieb auf der Grundlage der Simulation; und
Einschränken des mehrdimensionalen Raums durch Ausschließen der Steuerungszustände, die als mit normalem Netzbetrieb nicht übereinstimmend bestimmt werden.

11. Das computerimplementierte Verfahren nach Anspruch 1, wobei das Einschränken des mehrdimensionalen Raums das Ausschließen von Kombinationen von Netzsteuerungszuständen umfasst, die während des normalen Netzbetriebs inakzeptabel sind.

12. Ein System zum Bedienen eines Versorgungsnetzes, wobei das System umfasst:
einen Steuerungsspeicher, der Steuerungsinformationen speichert;
einen Raumdefinitionsprozessor, der konfiguriert ist, um die Steuerungsinformationen zu empfangen und auf der Grundlage der Steuerungsinformationen einen mehrdimensionalen Raum zu erzeugen;
einen mehrdimensionalen Raumspeicher, der konfiguriert ist, um den mehrdimensionalen Raum, der vom Raumdefinitionsprozessor erzeugt wird, zu empfangen und zu speichern;
einen Einschränkungsprozessor, der konfiguriert ist, um den mehrdimensionalen Raum aus dem mehrdimensionalen Raumspeicher zu empfangen und diesen mehrdimensionalen Raum einzuschränken; und
ein automatisiertes aktives Steuerungssystem, das konfiguriert ist, um Netzsteuerungszustände aus einem eingeschränkten mehrdimensionalen Raum auszuwählen,
wobei das System konfiguriert ist, um das Verfahren nach einem der Ansprüche 1 bis 11 auszuführen.

## Revendications

1. Procédé mis en œuvre par ordinateur, comprenant :
la réception d'informations de commande ;
la génération, en utilisant un processeur, d'un espace multidimensionnel d'états possibles de commande de réseau sur la base des informations de commande ;
la contrainte de l'espace multidimensionnel en retirant des états de commande de réseau qui sont à l'extérieur de conditions opérationnelles normales ;
la sélection, en utilisant un processeur, d'un état de commande de réseau parmi
l'espace multidimensionnel contraint ; et
l'ajustement automatique d'une ou plusieurs commandes du réseau de distribution pour mettre en oeuvre l'état de commande de réseau sélectionné.

2. Procédé mis en œuvre par ordinateur selon la revendication 1, dans lequel la ou les commandes comprennent un changeur de prise en charge.

3. Procédé mis en œuvre par ordinateur selon la revendication 1, dans lequel la ou les commandes comprennent une batterie de condensateurs.

4. Procédé mis en œuvre par ordinateur selon la revendication 1, dans lequel la ou les commandes comprennent des réponses à une excavation près de conduites de gaz.

5. Procédé implémenté par ordinateur selon la revendication 1, comprenant en outre :
la présentation d'un état de commande de réseau à un utilisateur par l'intermédiaire d'une interface utilisateur ;
la réception d'une entrée utilisateur concernant l'état de commande de réseau présenté ; et
l'inclusion ou l'exclusion de l'état de commande de réseau présenté par rapport à l'espace multidimensionnel contraint sur la base de l'entrée utilisateur.

6. Procédé mis en œuvre par ordinateur selon la revendication 1, dans lequel les données de commande comprennent un identificateur pour chaque commande et les états possibles de cette commande.

7. Procédé mis en œuvre par ordinateur selon la revendication 1, dans lequel la génération de l'espace multidimensionnel comprend l'attribution de plages de valeurs pour des commandes continues à des points distincts dans des dimensions correspondant aux commandes continues.

8. Procédé mis en œuvre par ordinateur selon la revendication 1, dans lequel l'espace multidimensionnel comprend une dimension pour chaque commande, avec un point dans cette dimension pour chaque état possible de cette commande.

9. Procédé mis en œuvre par ordinateur selon la revendication 1, dans lequel la contrainte de l'espace multidimensionnel comprend :
la réception de données opérationnelles de réseau ;
la détermination des états de commande représentés dans les données opérationnelles de réseau ; et la contrainte de l'espace multidimensionnel en excluant les états de commande non représentés dans les données opérationnelles.

10. Procédé mis en œuvre par ordinateur selon la revendication 1, dans lequel la contrainte de l'espace multidimensionnel comprend :
la simulation d'un comportement de commande de réseau dans un modèle de composant ;
la détermination des états de commande conformément à des opérations ordinaires de réseau sur la base de la simulation ; et
la contrainte de l'espace multidimensionnel en excluant les états de commande déterminés comme étant non conformes à des opérations ordinaires de réseau.

11. Procédé mis en œuvre par ordinateur selon la revendication 1, dans lequel la contrainte de l'espace multidimensionnel comprend l'exclusion de combinaisons d'états de commande de réseau qui sont inacceptables pendant une opération ordinaire de réseau.

12. Système de gestion d'un réseau de distribution, comprenant :
une mémoire de commande stockant des informations de commande ;
un processeur de définition d'espace configuré pour recevoir les informations de commande et générer un espace multidimensionnel sur la base des informations de commande ;
une mémoire d'espace multi-dimensionnel configurée pour recevoir et stocker l'espace multidimensionnel généré par le processeur de définition d'espace ;
un processeur de contrainte configuré pour recevoir l'espace multi-dimensionnel depuis la mémoire d'espace multidimensionnel et contraindre cet espace multidimensionnel ; et un système automatisé de commande active configuré pour sélectionner des états de commande de réseau parmi un espace multidimensionnel contraint, dans lequel le système est configuré pour effectuer le procédé selon l'une quelconque des revendications 1 à 11.
